# DEMANDE DE BREVET EUROPEEN

(11) **EP 4 458 442 A2**
(43) Date de publication de la demande: **06.11.2024**
(21) Numéro de dépôt: 24196022.8
(22) Date de dépôt: 05.12.2022
(51) Int. Cl.: B01D 3/32

(54) **PROCÉDÉ D'INSTALLATION D'UN TRONÇON DE GARNISSAGE DANS UNE VIROLE**

(30) Priorité: 22.12.2021 FR 2114214
(62) Demande divisionnaire de: 22211458.9
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: FAUCHER, VIncent, Paris 75007 (FR); DOS REIS, Manuel, 75007 Paris (FR); MARET, Vincent, 75007 Paris (FR); TORBADO, Luis, 75007 Paris (FR); APPEL, Alain, 75007 Paris (FR); LECLERC, Laurent, 75007 Paris (FR); BIRET, Eric, 75007 Paris (FR)
(74) Mandataire: Air Liquide

(57) **Abrégé**

La présente invention a pour principal objet un procédé d'installation d'un tronçon de garnissage (2) dans une virole (1) à l'aide d'un dispositif d'aide à l'installation (14) d'un tronçon de garnissage (2), la virole (1) comprenant au moins une paroi tubulaire (4) s'étendant le long d'une direction longitudinale (L) entre deux extrémités longitudinales et dont une face interne (6) participe à délimiter un logement du tronçon de garnissage (2), la paroi tubulaire (4) participant à délimiter à l'une de ses extrémités longitudinales une ouverture d'entrée (10), la virole (1) comprenant une paroi de fond (12) disposée à l'extrémité longitudinale opposée à l'ouverture d'entrée (10), la virole (1) étant positionnée horizontalement lors du procédé d'installation du tronçon de garnissage (2), le procédé comprenant une étape de montage du dispositif d'aide à l'installation (14) sur la virole (1) au cours de laquelle le dispositif d'aide à l'installation (14) est fixé au voisinage de l'ouverture d'entrée (10) de la virole (1), une étape de positionnement du tronçon de garnissage (2) par rapport au dispositif d'aide à l'installation (14) et à l'ouverture d'entrée (10), et au moins une étape de poussée au cours de laquelle le tronçon de garnissage (2) est poussé dans le logement de la virole (1).

## Description

La présente invention se rapporte au domaine des colonnes de séparation gaz/liquide et à leur assemblage et elle concerne plus particulièrement un procédé d'installation d'un tronçon de garnissage dans une virole afin de former ces dites colonnes de séparation gaz/liquide.

Les colonnes de séparation gaz/liquide sont connues depuis de nombreuses années et permettent par exemple de réaliser une séparation de différents éléments chimiques entrant dans la composition d'un fluide homogène, par exemple par distillation ou par absorption.

La fabrication d'une colonne de séparation gaz/liquide comprend notamment une étape d'insertion d'une pluralité de tronçons de garnissage au sein d'une virole. Les tronçons de garnissages sont notamment utilisés dans les colonnes pour assurer l'échange de matière et de chaleur entre un gaz montant et un liquide descendant. Ces tronçons de garnissage, qui sont notamment constitués par une superposition de plusieurs bandes ondulées, sont souvent appelés "packs". Les tronçons de garnissage sont classiquement empilés les uns sur les autres, le cas échéant avec des séparateurs interposés, afin de participer à la séparation des composants du fluide sur la dimension axiale de la colonne.

Il est connu de procéder à l'insertion des tronçons de garnissage au sein d'une virole maintenue verticale, la force de gravité facilitant grandement la progression du tronçon de garnissage inséré au sein de la virole. Un tel procédé peut toutefois s'avérer contraignant lorsque les colonnes de séparation gaz/liquide à assembler présentent un diamètre important et une dimension axiale nécessitant la mise en oeuvre de viroles de grande longueur, de l'ordre de plusieurs dizaines de mètres. En effet, de tels procédés avec une insertion verticale des tronçons de garnissage nécessitent alors un outillage apte à soulever les tronçons de garnissage sur une grande distance afin de les mettre en regard de l'extrémité de la virole ainsi qu'un site de production présentant une hauteur de plafond supérieure à la longueur de la virole.

Il est donc souhaité, pour les viroles de longueur élevée, de prévoir un procédé d'assemblage dans lequel l'insertion des tronçons de garnissage est effectuée avec la virole agencée à l'horizontale. Une telle position rend difficile l'insertion des tronçons de garnissage du fait que ladite insertion nécessite une force de poussée considérable sur l'ensemble de la longueur de la virole, la gravité n'intervenant plus comme force d'accompagnement du mouvement du tronçon de garnissage au sein de la virole.

Cette force de gravité peut même entraîner une légère déformation de la virole et rendre compliqué le centrage du tronçon de garnissage par rapport à une ouverture d'entrée de la virole en regard de laquelle le tronçon de garnissage doit être positionné avant d'être poussé à l'intérieur de cette virole.

Dans une telle installation et une insertion des tronçons de garnissage à l'horizontale, il est difficile de positionner le tronçon de garnissage en regard de l'ouverture d'entrée de la virole en amont de sa poussée à l'intérieur de la virole, et plus encore de maintenir le tronçon en position lorsque l'on désengage le tronçon de garnissage de son moyen de transport pour qu'il puisse être inséré par un moyen de poussée approprié. Il est dès lors nécessaire de faire intervenir très vite le moyen de poussée pour que la poussée du tronçon de garnissage soit réalisée dès que le tronçon de garnissage est en regard de l'ouverture, la gravité tendant à décaler verticalement le tronçon de garnissage de l'ouverture d'entrée de la virole installée horizontalement dès que celui-ci est lâché par son moyen de transport.

Dans ce contexte, la présente invention a pour principal objet un procédéselon la revendication 1.

La virole prend avantageusement et globalement une forme cylindrique s'étendant le long de la direction longitudinale, cette dernière étant parallèle à l'axe de révolution dudit cylindre. On comprend de ce qui précède, et du montage à l'horizontal de la virole, que la direction longitudinale est sensiblement parallèle au sol sur lequel est installée la virole lors du procédé d'installation du tronçon de garnissage. Cette disposition particulière de la virole par rapport au sol facilite l'insertion de tronçon de garnissage lorsque la virole présente une longueur, mesurée le long d'une direction parallèle à la direction longitudinale, et un diamètre, correspondant au diamètre du cylindre, égaux et/ou supérieurs à une dizaine de mètres par exemple. Cependant, un tel procédé d'installation d'un tronçon de garnissage peut également être appliqué sur l'installation de tronçon de garnissage sur une virole dont la longueur et/ou le diamètre seraient inférieurs à une dizaine de mètres.

L'étape de montage du dispositif d'aide à l'installation sur la virole est réalisée en amont de l'étape de positionnement et de l'étape de poussée. Le dispositif d'aide à l'installation est avantageusement fixé au voisinage de l'ouverture d'entrée pour assister le montage du tronçon de garnissage dans la virole, de sorte à s'assurer du bon positionnement de ces deux éléments l'un par rapport à l'autre et réduire le risque de déformation de la virole et/ou du tronçon de garnissage lors de la poussée de l'un dans l'autre. La fixation est avantageusement une fixation amovible pour que le dispositif d'aide à l'installation puisse être retiré une fois que l'ensemble des tronçons de garnissage sont disposés à l'intérieur de la virole. Par exemple, la fixation du dispositif d'aide à l'installation est réalisée par vissage entre ledit dispositif d'aide à l'installation et la paroi tubulaire de la virole.

On comprend que le dispositif d'aide à l'installation prend une première position dans laquelle le dispositif d'aide à l'installation est solidaire de la virole et une seconde position dans laquelle le dispositif d'aide à l'installation est désolidarisé de la virole.

Au cours de l'étape de positionnement du tronçon de garnissage, on positionne le tronçon de garnissage par rapport au dispositif d'aide à l'installation pour faciliter l'insertion du tronçon de garnissage dans la virole, c'est-à-dire que le dispositif d'aide à l'installation est configuré pour que le tronçon de garnissage soit correctement centré lorsqu'il repose sur le dispositif d'aide à l'installation. De la sorte, il est possible par la suite de pousser facilement le tronçon de garnissage dans la virole et ainsi réduire les forces de frottement contre la face interne de la paroi tubulaire.

Selon une caractéristique optionnelle de l'invention, au cours de l'étape de positionnement, un moyen de transport du tronçon de garnissage maintient le tronçon de garnissage en regard de l'ouverture d'entrée au moins jusqu'à ce que ledit tronçon de garnissage soit positionné contre le dispositif d'aide à l'installation. Le moyen de transport peut notamment être formé par un dispositif d'insertion de tronçon de garnissage, qui comprend à la fois des moyens de maintien d'un tronçon de garnissage et des moyens de poussée de ce tronçon de garnissage. Le moyen de transport peut également être un système portatif de tronçons de garnissage, indépendant d'un moyen de poussée.

On entend par « portion inférieure » une portion de la virole au voisinage du sol sur lequel repose la virole, cette disposition s'appréciant par rapport à une direction verticale sensiblement perpendiculaire à la direction longitudinale. Selon une autre caractéristique optionnelle de l'invention, le dispositif d'aide à l'installation d'un tronçon de garnissage comprend un cône amovible, le procédé d'installation du tronçon comprenant une étape de montage d'un cône amovible sur la virole et au moins une étape de centrage au cours de laquelle le cône amovible centre le tronçon de garnissage par rapport à l'ouverture d'entrée de la virole.

Selon une autre caractéristique optionnelle de l'invention, le cône amovible est fixé sur une portion supérieure de la virole au voisinage de l'ouverture d'entrée. On entend par « portion supérieure » une portion de la virole opposée au sol sur lequel repose la virole par rapport à la partie inférieure, cette disposition s'appréciant par rapport à une direction verticale sensiblement perpendiculaire à la direction longitudinale.

Selon une autre caractéristique optionnelle de l'invention, le berceau présente une section au moins partiellement circulaire vue dans un plan perpendiculaire à la direction longitudinale et s'inscrivant dans un cercle de diamètre identique à celui dans lequel s'inscrit la paroi tubulaire de la virole. En d'autres termes, le berceau s'étend dans le prolongement de la virole, en présentant une courbure similaire à celle de la virole.

Selon une autre caractéristique optionnelle de l'invention, le berceau s'étend sur au moins 25% de la circonférence de l'ouverture d'entrée de la virole. On comprend ici que la section du berceau prend globalement la forme d'un arc de cercle, de sorte à s'étendre sur une portion de la circonférence de l'ouverture d'entrée. Du fait de la position en partie inférieure du berceau, celui-ci n'a pour fonction que d'assurer le maintien vertical du tronçon de garnissage pour s'assurer que la position verticale de ce tronçon soit correcte par rapport à la virole, le berceau pouvant présenter une étendue circonférentielle telle que des bords relevés empêchent le tronçon de garnissage en place sur le berceau de basculer latéralement. Plus particulièrement, le berceau peut s'étendre sur 33% de la circonférence de l'ouverture d'entrée de la virole.

Selon une autre caractéristique optionnelle de l'invention, le berceau présente une dimension longitudinale, mesurée entre l'ouverture d'entrée de la virole et une extrémité libre du berceau, qui est comprise entre 75 et 150mm. La dimension longitudinale, mesurée parallèlement à l'axe de révolution du cylindre formant la virole, est supérieure à 75mm afin de permettre une reprise d'efforts suffisante pour soutenir le tronçon de garnissage durant l'étape de positionnement et en attendant que le tronçon de garnissage soit poussé à l'intérieur de la virole. Avantageusement, la dimension longitudinale est comprise entre 90 et 110mm. Encore plus avantageusement, la dimension longitudinale est de 100mm.

Selon une autre caractéristique optionnelle de l'invention, le berceau comprend au moins un matériau métallique.

Selon une autre caractéristique optionnelle de l'invention, le berceau comprend de l'acier inoxydable et/ou de l'aluminium.

Selon une caractéristique optionnelle de l'invention, le moyen de fixation est disposé à demeure sur la virole et configuré pour pouvoir coopérer avec un corps d'attache du dispositif d'aide à l'installation de tronçon de garnissage.

Selon une caractéristique optionnelle de l'invention, le moyen de fixation est un cordon de soudure entre le dispositif d'aide à l'installation de tronçon de garnissage et la virole.

Selon une autre caractéristique optionnelle de l'invention, le dispositif d'aide à l'installation comprend un cône amovible, le corps d'attache étant porté par le cône amovible, le corps d'attache coopérant avec le moyen de fixation pour rendre solidaire le cône amovible de la virole.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] est une représentation en perspective d'une virole mise en oeuvre dans un procédé d'installation d'un tronçon de garnissage selon l'invention ;
[Fig. 2] est une représentation en perspective d'un tronçon de garnissage mis en oeuvre dans le procédé d'installation d'un tronçon de garnissage selon l'invention ;
[Fig. 3] est une représentation en perspective d'une étape de positionnement du procédé d'installation d'un tronçon de garnissage selon l'invention ;
[Fig. 4] est une représentation vue de côté d'une étape de poussée du procédé d'installation d'un tronçon de garnissage selon l'invention ;
[Fig. 5] est une représentation en perspective d'une variante de la virole mise en oeuvre dans un procédé d'installation d'un tronçon de garnissage selon l'invention.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieure.

Sur les figures, les éléments communs à plusieurs figures conservent la même référence.

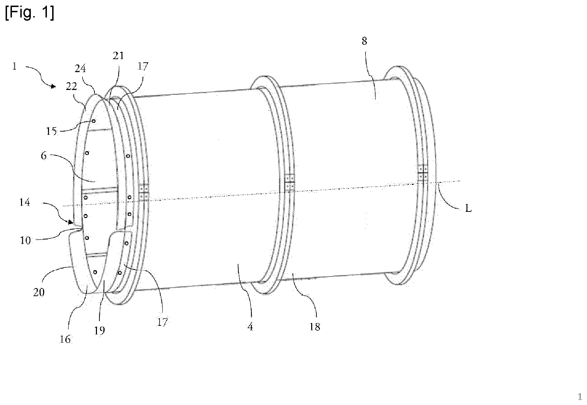

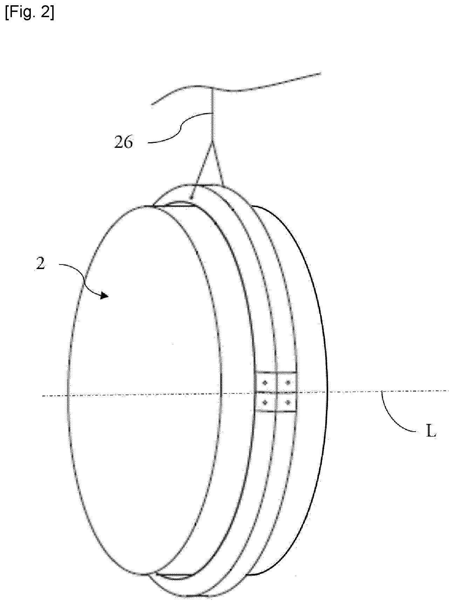

Sur la figure 1 est illustré une virole 1 mise en oeuvre lors d'un procédé d'installation d'un tronçon de garnissage 2 selon l'invention, le tronçon de garnissage 2 étant représenté sur la figure 2. Ce procédé d'installation du tronçon de garnissage 2 permet de pouvoir installer dans la virole 1 un tronçon de garnissage 2, notamment lors d'une installation dans une virole disposée à l'horizontale, en diminuant de façon astucieuse le risque de déformation de la virole 1 lors dudit procédé.

La virole 1 s'étend principalement le long d'une direction longitudinale L en présentant ainsi deux extrémités longitudinales. La virole 1 est positionnée horizontalement lors du procédé d'installation du tronçon de garnissage 2, c'est-à-dire que la direction longitudinale L s'étend sensiblement parallèlement au sol sur lequel est installée la virole 1.

Plus particulièrement, la virole 1 comprend au moins une paroi tubulaire 4, qui s'étend principalement le long de la direction longitudinale L en prenant globalement la forme d'un cylindre droit, la direction longitudinale L correspondant ici à la direction principale d'extension de la paroi tubulaire 4 et à son axe de révolution. En d'autres termes, une section de la paroi tubulaire 4 vue dans un plan perpendiculaire à la direction longitudinale L s'inscrit sensiblement dans un cercle.

La paroi tubulaire 4 présente une face interne 6 orientée vers l'intérieur de la virole 1 et une face externe 8 tournée vers l'extérieur de la virole 1. La face interne 6 de la paroi tubulaire 4 participe à délimiter un logement d'au moins un tronçon de garnissage 2, installé dans la virole 1 via le procédé d'installation selon l'invention.

La paroi tubulaire 4 participe à délimiter une ouverture d'entrée 10 à l'une des extrémités longitudinales de la virole 1. L'ouverture d'entrée 10 correspond à l'ouverture par laquelle sont insérés les tronçons de garnissage 2 dans la virole 1 au cours dudit procédé d'installation.

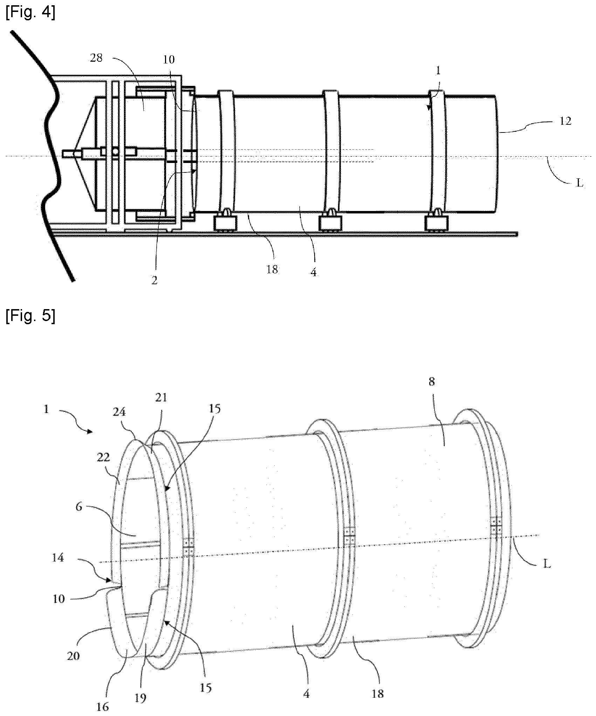

La virole 1 comprend une paroi de fond 12, visible sur la figure 4, disposée à l'autre extrémité longitudinale de la virole 1, c'est-à-dire à l'opposé de l'ouverture d'entrée 10. Au moins le premier tronçon de garnissage 2 installé dans la virole 1 est positionné au voisinage de la paroi de fond, le cas échéant contre la paroi de fond 12.

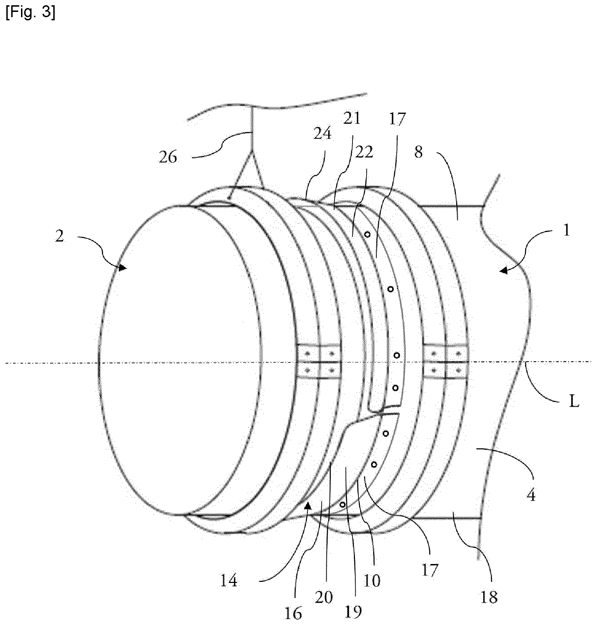

Le tronçon de garnissage 2, tel qu'illustré sur les figures 2 et 3, prend globalement la forme d'un corps cylindrique apte à être installé dans le logement de la paroi tubulaire 4. Autrement dit, le tronçon de garnissage 2 présente un bord périphérique 8 dont le profil, vu dans un plan perpendiculaire à la direction longitudinale L, est un cercle dont le diamètre est égal ou sensiblement inférieur au diamètre de la virole au niveau de la face interne de la paroi tubulaire 4.

Tel que cela a pu être évoqué précédemment, un tronçon de garnissage est notamment constitué par une superposition de plusieurs bandes ondulées et entrecroisées et l'empilement de ces tronçons au sein d'une virole permet d'assurer, lors du fonctionnement de la colonne de séparation gaz/liquide comportant cette virole, l'échange de matière et de chaleur entre un gaz montant et un liquide descendant. Les tronçons de garnissage sont classiquement empilés les uns sur les autres, le cas échéant avec des séparateurs interposés. L'obtention d'une colonne de séparation passe ainsi par l'insertion de tronçons de garnissage au sein de la virole les uns après les autres, via un dispositif d'insertion approprié au cours d'un procédé d'installation de tronçons de garnissage.

Selon l'invention, le procédé d'installation d'un tronçon de garnissage 2 dans une virole 1 est réalisé à l'aide d'un dispositif d'aide à l'installation 14 d'un tronçon de garnissage 2, qui est plus particulièrement disposé au voisinage de l'extrémité longitudinale de la virole 1 formant l'ouverture d'entrée 10. Tel que cela va être décrit, ce dispositif d'aide à l'installation 14 est un dispositif amovible, qui n'est fixé sur la virole 1 que lors du procédé d'insertion de tronçon de garnissage au sein de la virole, avec la virole en position horizontale, et qui est enlevé par la suite, notamment lorsque la virole reprend une position fonctionnelle verticale. A cet effet, la virole 1 comprend au moins un moyen de fixation 15 du dispositif d'aide à l'installation 14 à la virole 1, ce moyen de fixation 15 pouvant selon les variantes de réalisation de l'invention être formé d'un élément présent à demeure sur la virole 1 et notamment sur la paroi tubulaire 4 de la virole, et utilisé uniquement lorsque le dispositif d'aide à l'installation 14 doit être fixé sur la virole, ou bien être formé par un cordon de soudure réalisé entre la virole 1 et le dispositif d'aide à l'installation 14, le cordon de soudure étant dessoudé dans un deuxième temps après insertion des tronçons de garnissage dans la virole 1.

Selon un premier mode de réalisation, cet au moins un moyen de fixation 15 peut par exemple prendre la forme d'un orifice traversant ménagé dans la paroi tubulaire 4 de la virole 1, l'orifice étant destiné à recevoir un ensemble de serrage, par exemple une vis coopérant avec un boulon pour plaquer contre la paroi tubulaire 4 un corps d'attache 17 du dispositif d'aide à l'installation 14 équipé de trous disposés en regard des moyens de fixation 15 ménagés sur la virole. Une fois le procédé d'installation selon l'invention terminé et le dispositif d'aide à l'installation 14 retiré de la virole 1, l'au moins un moyen de fixation 15 se distingue d'autres organes de fixation, pouvant permettre de fermer la virole par un couvercle par exemple, en ce qu'il s'étend au voisinage de l'ouverture d'entrée 10 sans fonction particulière, le cas échéant fermé par un élément d'étanchéité. Selon un deuxième mode de réalisation, qui peut notamment être mis en oeuvre pour optimiser la fixation du berceau 16 sur la paroi tubulaire 4 de la virole 1, l'au moins un moyen de fixation 15 peut prendre la forme d'un cordon de soudure formé entre une extrémité longitudinale de la paroi tubulaire 4 et le dispositif d'aide à l'installation 14. Ce cordon de soudure est notamment réalisé afin de rendre solidaire le dispositif d'aide à l'installation 14 de l'ouverture d'entrée 10 de la virole 1. Avantageusement, le cordon de soudure est issu d'un soudage bord à bord entre le dispositif d'aide à l'installation 14 et la paroi tubulaire 4. En d'autres termes, le dispositif d'aide à l'installation 14 et la paroi tubulaire 4 sont positionnées en contact l'un de l'autre au niveau d'un bord d'extrémité, sans recouvrement de l'un ou l'autre bord, au moment du soudage entre le dispositif d'aide à l'installation 14 et la paroi tubulaire 4.

Tel qu'illustré sur la figure 1, et notamment visible sur la figure 3, le dispositif d'aide à l'installation 14 comprend un berceau 16 qui s'étend dans un prolongement d'au moins une partie de la paroi tubulaire 4, depuis l'ouverture d'entrée 10 le long de la direction longitudinale L à l'opposé de la paroi de fond 12. Autrement dit, le berceau 16 prend la forme d'une paroi d'extension faisant saillie depuis la paroi tubulaire 4, au voisinage de l'extrémité longitudinale de la virole 1 dans laquelle est ménagée l'ouverture d'entrée 10, à l'opposé de la paroi de fond 12.

Le berceau 16 est notamment configuré pour recevoir et porter au moins partiellement le tronçon de garnissage 2 au cours du procédé d'installation selon l'invention, et notamment préalablement à son insertion au sein de la virole. Durant le procédé d'installation, lorsque la virole 1 est positionnée horizontalement, le berceau 16 est installé dans le prolongement d'une portion inférieure 18 de la virole 1, cette portion inférieure 18 s'appréciant par rapport à une direction verticale s'étendant perpendiculairement par rapport au plan d'extension principale du sol sur lequel est disposé ladite virole 1. On comprend que le berceau 16 est disposé au niveau de la portion inférieure 18 de la virole 1 pour pouvoir faire reposer dessus le tronçon de garnissage 2 et le maintenir en position, en regard de l'ouverture d'entrée 10, malgré la force gravitationnelle qui tend à attirer le tronçon de garnissage vers le sol. Dans cette disposition, le berceau 16 peut porter le tronçon de garnissage 2 de sorte que celui-ci reste positionné en regard de l'ouverture d'entrée 10 de la virole 1, notamment le temps que le moyen de transport utilisé pour amener le tronçon de garnissage dans cette position soit désengagé du tronçon de garnissage et qu'un moyen de poussée approprié soit agencé pour enfoncer ce tronçon de garnissage dans la virole.

Le berceau 16 présente une section au moins partiellement circulaire vue dans un plan perpendiculaire à la direction longitudinale L et s'inscrivant dans un cercle de diamètre identique à celui dans lequel s'inscrit la paroi tubulaire 4 de la virole 1. En d'autres termes, la courbure du berceau 16 est sensiblement la même que la courbure de la paroi tubulaire 4.

Tel qu'illustré, la section du berceau 16 prend globalement la forme d'un arc de cercle, de sorte à s'étendre sur une portion de la circonférence de l'ouverture d'entrée 10. Plus particulièrement, le berceau 16 s'étend sur au moins 25% de la circonférence de l'ouverture d'entrée 10 de la virole 1, en s'étendant notamment de part et d'autre, avantageusement symétriquement, de la portion inférieure de la virole, c'est-à-dire la portion de la virole la plus proche du sol sur lequel repose cette virole. De la sorte, le berceau assure d'une part le support du tronçon de garnissage lorsque celui-ci est lâché par le moyen de transport et le berceau évite que le tronçon de garnissage s'échappe latéralement.

Tel que cela a été évoqué précédemment, le berceau 16 peut être soudé bord à bord sur la virole 1, dans le prolongement direct du bord participant à délimiter l'ouverture d'entrée 10 de la virole 1, ou bien être fixé par des moyens d'attaches réversibles, via un corps d'attache 17 qui est alors destiné à être en contact de la paroi tubulaire 4 de la virole 1. Dans chacune de ces variantes, le berceau comporte une portion de support 19, formant la partie en saille de la virole 1 et qui présente à l'opposé de l'ouverture d'entrée 10 une extrémité libre 22.

Le cas échéant, le corps d'attache 17 est plaqué contre une face de la paroi tubulaire, ici la face externe de cette paroi tubulaire 4 sans que cela soit toutefois limitatif de l'invention. Le corps d'attache 17 présente une dimension longitudinale permettant d'assurer un recouvrement suffisant de la paroi tubulaire et de permettre une stabilité de l'ensemble du berceau, et plus particulièrement permettre une tenue des moyens de fixation 15 sans arrachement du berceau lorsque le tronçon de garnissage est en appui sur la portion de support 19 du berceau.

La portion de support 19 du berceau présente une dimension longitudinale, mesurée entre l'ouverture d'entrée 10 de la virole 1 et l'extrémité libre 20, qui est comprise entre 75 et 150mm. On comprend ici que la dimension longitudinale du berceau 16 est d'au moins 75mm afin de permettre de pouvoir positionner le tronçon de garnissage 2 correctement sur le berceau 16 lors du procédé d'installation. Cette dimension longitudinale correspond de plus à au moins 50% d'une dimension longitudinale du tronçon de garnissage 2. Plus particulièrement, la dimension longitudinale du berceau peut être comprise entre 90 et 110mm, et être de l'ordre de 100mm.

Tel que cela a été évoqué précédemment pour le deuxième mode de réalisation de l'invention, le berceau 16 peut présenter une extrémité longitudinale qui est soudée à l'ouverture d'entrée 10 de la virole 1, cette extrémité longitudinale pouvant ensuite être dessoudée à la fin du procédé de montage. Le retrait du berceau 16 peut aussi être réalisé par découpage de l'ouverture d'entrée 10 de la virole 1. On comprend ainsi que le berceau 16 ne comprend pas de corps d'attache tel qu'il a pu être décrit ci-dessus.

Le berceau 16 comprend au moins un matériau métallique, qui peut notamment consister en de l'acier inoxydable et/ou de l'aluminium.

Ce type de matériau optimise ainsi la solidité du berceau 16 et sa faculté à porter le tronçon de garnissage 2 durant le procédé d'installation.

Tel qu'illustré sur la figure 1, et notamment visible sur la figure 3, le dispositif d'aide à l'installation 14 peut comprendre un cône amovible 22 configuré pour guider le montage du tronçon de garnissage 2 en centrant ledit tronçon de garnissage 2 sur l'ouverture d'entrée 10.

Tel que cela a été évoqué précédemment, le cône amovible 22 peut être soudé bord à bord sur la virole 1, dans le prolongement direct du bord participant à délimiter l'ouverture d'entrée 10 de la virole 1, ou bien être fixé par des moyens d'attaches réversibles, via un corps d'attache 17 qui est alors destiné à être en contact de la paroi tubulaires 4 de la virole 1. Dans chacune de ces variantes, le cône amovible 22 comporte une portion de guidage 21, formant la partie en saille de la virole 1 et qui présente à l'opposé de l'ouverture d'entrée 10 un bord libre 24.

Le cas échéant, le corps d'attache 17 est plaqué contre la face externe de cette paroi tubulaire, sans que cela soit toutefois limitatif de l'invention. Le corps d'attache 17 présente une dimension longitudinale qui permet d'assurer un recouvrement suffisant de la paroi tubulaire 4 de la virole 1 et de permettre une stabilité de l'ensemble du cône amovible 22, et plus particulièrement de permettre une tenue des moyens de fixation 15 sans arrachement du cône amovible lorsque le tronçon de garnissage vient forcer longitudinalement contre le cône amovible pour être centré.

Plus précisément, le cône amovible 22 est installé à l'ouverture d'entrée 10 de la virole 1, et la portion de guidage 21 du cône amovible 22 forme une portion tronconique dont la section est au moins partiellement circulaire vue dans un plan perpendiculaire à la direction longitudinale, cette section tendant à s'agrandir au fur et à mesure qu'on s'éloigne de l'ouverture d'entrée 10 et de la virole dans son ensemble. Autrement dit, en considérant une première section de la portion tronconique du cône amovible 22, vue dans un plan perpendiculaire à la direction longitudinale L, au voisinage du bord libre 24 du cône amovible 22 et en considérant une deuxième section, vue dans un plan perpendiculaire à la direction longitudinale L, au voisinage de l'ouverture d'entrée 10, la première section du cône amovible 22 s'inscrit dans un cercle de diamètre plus important que le cercle dans lequel s'inscrit la deuxième section du cône amovible 22. On comprend ici que le cône amovible 22 est disposé à l'ouverture d'entrée 10 de la virole 1 de sorte que, lors du procédé d'installation du tronçon de garnissage 2, le cône amovible 22 guide le tronçon de garnissage 2 en le centrant sur l'ouverture d'entrée 10. Le cône amovible 22 oriente ainsi le tronçon de garnissage 2 de sorte qu'un axe parallèle à la direction longitudinale L et passant par le centre du cercle dans lequel s'inscrit la courbure de la surface externe 8 du tronçon de garnissage 2 soit confondu avec l'axe de révolution de la paroi tubulaire 4 de la virole 1.

Selon la variante de réalisation de l'invention illustré sur la figure 5, le cône amovible 22 présente une extrémité longitudinale qui est soudée bord à bord avec le bord de la virole délimitant l'ouverture d'entrée 10 de la virole 1, cette extrémité longitudinale pouvant ensuite être dessoudée de la virole à la fin du procédé de montage, c'est-à-dire une fois les tronçons de garnissage installés. Le retrait du cône amovible 22 peut aussi être réalisé par découpage de l'ouverture d'entrée 10 de la virole 1. On comprend ainsi que le cône amovible 22 ne comprend donc pas de corps d'attache tel qu'il a pu être décrit ci-dessus. Le cône amovible 22 s'étend sur au moins 50% de la circonférence de l'ouverture d'entrée 10 de la virole 1, et préférentiellement sur 67% de cette circonférence. La section du cône amovible 22 prend ici globalement la forme d'un arc de cercle, de sorte à s'étendre sur une portion de la circonférence de l'ouverture d'entrée 10. Une telle étendue circonférentielle du cône amovible 22 est suffisante pour centrer le tronçon de garnissage 2 sur l'ouverture d'entrée 10, et elle permet d'autre part de pouvoir installer le cône amovible 22 et le berceau 16 sur le pourtour de l'ouverture d'entrée 10.

Dans l'exemple illustré, le berceau 16 et le cône amovible 22 s'étendent l'un à la suite de l'autre de sorte que leurs corps d'attache 17 respectifs couvrent ensemble sensiblement l'intégralité de la circonférence de l'ouverture d'entrée 10 de la virole 1.

Le cône amovible 22 présente une dimension longitudinale mesurée entre l'ouverture d'entrée 10 de la virole 1 et le bord libre 24 du cône amovible 22 comprise entre 30 et 50mm. Cette dimension est notamment mesurée le long d'une direction parallèle à la direction longitudinale L, entre le bord du cône amovible 22 en contact de la paroi tubulaire 4 et une projection du bord libre 24 du cône amovible 22 sur ladite direction. La dimension longitudinale est supérieure à 30 mm afin de pouvoir centrer sur l'ouverture d'entrée 10 le tronçon de garnissage 2 durant l'étape de positionnement. Plus particulièrement, la dimension longitudinale de la portion tronconique du cône amovible peut être comprise entre 30 et 40mm, et être de l'ordre de 35mm.

Il résulte des dimensions longitudinales données précédemment à titre indicatif pour le berceau 16 et le cône amovible 22 que la dimension longitudinale du berceau 16 est avantageusement plus grande que la dimension longitudinale du cône amovible 22. Le berceau a pour fonction d'assurer un soutien éventuel au tronçon de garnissage 2 durant le centrage dudit tronçon de garnissage 2 par le cône amovible 22. Plus encore, le berceau 16 a pour fonction de porter le tronçon de garnissage 2 entre le moment où le moyen de transport, utilisé pour amener le tronçon de garnissage en regard de l'ouverture d'entrée de la virole, lâche le tronçon de garnissage et le moment où le moyen de poussée, utilisé pour insérer le tronçon de garnissage au sein de la virole par un mouvement de poussée horizontale, est en contact avec le tronçon de garnissage. Le lâcher du tronçon a lieu une fois que le tronçon de garnissage 2 a été centré par l'intermédiaire du cône amovible 22.

Le cône amovible 22 comprend au moins un matériau métallique. Avantageusement, le matériau métallique peut être de l'acier inoxydable et/ou de l'aluminium.

Par le matériau qu'il comprend, le cône amovible 22 est élastiquement déformable entre une position de centrage, sous la contrainte du tronçon de garnissage, et une position de repos qu'il tend à reprendre en recentrant de fait le tronçon de garnissage. Cette caractéristique favorise l'installation et le centrage du tronçon de garnissage 2 sur l'ouverture d'entrée 10 en diminuant le risque de dégradation de la virole 1 et/ou du tronçon de garnissage 2.

Tel qu'évoqué précédemment, chaque composant potentiel du dispositif d'aide à l'installation 14, à savoir le berceau 16 et éventuellementle cône amovible 22, peut présenter un corps d'attache 17 destiné à être plaqué contre la paroi tubulaire de la virole pour permettre la fixation amovible du dispositif d'aide à l'installation lors de du procédé d'installation du tronçon de garnissage selon l'invention. De manière plus générale, il peut être ainsi considéré que le dispositif d'aide à l'installation comporte un corps d'attache 17 qui doit être fixé sur la paroi tubulaire 4 de la virole.

A cet effet, des trous de fixation sont réalisés à travers la plaque formant le corps d'attache 17 pour être disposés en regard des moyens de fixation 15, plus particulièrement ici les orifices, présents dans la portion tubulaire au voisinage de l'ouverture d'entrée. Un ensemble de serrage, ici non visible et par exemple de type vis-écrou, est ensuite utilisé pour coopérer avec les trous de fixation du corps d'attache 17 et les moyens de fixation 15 de la virole, pour rendre solidaire le berceau 16 et/ou le cône amovible 22 de la virole 1.

Ainsi, tel qu'illustré sur la figure 1, la virole 1 comprend plusieurs moyens de fixation 15 disposés régulièrement sur le pourtour de la paroi tubulaire, ou bien tel qu'illustré sur la figure 5, la virole 1 peut comporter un moyen de fixation unique s'étendant sur tout le pourtour de la virole 1 et formé par un cordon de soudure.

On va maintenant décrire plus en détails le procédé d'installation du tronçon de garnissage 2 dans la virole 1 à l'aide d'un dispositif d'aide à l'installation 14 du tronçon de garnissage 2, en référence aux figures 1 à 5.

Pour rappel, la virole 1 est installée horizontalement afin de pouvoir monter le tronçon de garnissage 2 le long de la direction longitudinale L. De plus, et selon l'exemple illustré ici, la virole 1 est équipée d'un dispositif d'aide à l'installation 14 du tronçon de garnissage 2 comprenant à la fois un berceau 16 et un cône amovible 22. Cependant, un procédé d'installation d'un tronçon de garnissage 2 mettant en oeuvre un dispositif d'aide à l'installation 14 d'un tronçon de garnissage 2 ne comprenant que le berceau 16 ne sortirait pas du cadre de l'invention.

Selon l'invention, le procédé comprend une étape de montage du dispositif d'aide à l'installation 14 sur la virole 1, au cours de laquelle le dispositif d'aide à l'installation 14 est fixé au voisinage de l'ouverture d'entrée 10 de la virole 1, une étape de positionnement du tronçon de garnissage 2 en regard de l'ouverture d'entrée 10, en coopération avec le dispositif d'aide à l'installation 14, et au moins une étape de poussée au cours de laquelle le tronçon de garnissage 2 est poussé dans le logement de la virole 1.

L'étape de montage du dispositif d'aide à l'installation 14 sur la virole 1 est réalisée en amont de l'étape de positionnement et de l'étape de poussée. Le dispositif d'aide à l'installation 14 est avantageusement fixé au voisinage de l'ouverture d'entrée 10 pour assister le montage du tronçon de garnissage 2 dans la virole 1, de sorte à réduire le risque de déformation de la virole 1. Par exemple, la fixation du dispositif d'aide à l'installation 14 est réalisée par vissage, ou par soudage le cas échéant, entre ledit dispositif d'aide à l'installation 14 et la paroi tubulaire 4 de la virole 1, en fixant le berceau 16 à la paroi tubulaire 4 puis le cône amovible 22 à ladite paroi tubulaire 4, ou l'inverse.

Le procédé de montage comprend ainsi une étape de montage du berceau 16 sur la virole 1 au cours de laquelle le berceau 16 est fixé sur une portion inférieure 18 de la paroi tubulaire 4 de la virole 1 au voisinage de l'ouverture d'entrée 10, et une étape de montage d'un cône amovible 22 sur une partie supérieure de la paroi tubulaire 4 de la virole 1. Le montage de chacun de ces éléments du dispositif d'aide à l'installation se fait ici de manière similaire, en disposant le corps d'attache 17 contre la paroi tubulaire 4 de la virole et en laissant en saillie de la virole la portion de support 19 du berceau et/ou la portion de guidage 21 du cône amovible, puis en ajustant la position pour que les trous formés dans le corps d'attache 17 soit en regard des moyens de fixation 15 de la virole, et enfin en serrant les ensembles de serrage prévus à cet effet et traversant les moyens de fixation 15 et le corps d'attache 17.

Dans le deuxième mode de réalisation de l'invention, le montage de chacun de ces éléments du dispositif d'aide à l'installation 14 se fait de manière similaire en soudant le bord du berceau 16 et du cône amovible 22 au bord de la virole 1 participant à délimiter l'ouverture d'entrée 10. Cette soudure bord à bord permet de pouvoir laisser en saille de la virole 1 la portion de support 19 du berceau 16 et/ou la portion de guidage 21 du cône amovible 22.

On comprend ici que la fixation du dispositif d'aide à l'installation 14 est amovible, de sorte qu'en fin du procédé qui va continuer d'être décrit, le dispositif d'aide à l'installation 14 est désolidarisé de la virole 1. De la sorte, le dispositif d'aide à l'installation 14, et a *fortiori* le berceau 16 et éventuellement cône amovible 22, est apte à prendre une première position dans laquelle le dispositif d'aide à l'installation 14 est solidaire de la virole 1 et une seconde position dans laquelle le dispositif d'aide à l'installation 14 est désolidarisé de la virole 1.

Au cours de l'étape de positionnement du tronçon de garnissage 2, on positionne le tronçon de garnissage 2 par rapport au dispositif d'aide à l'installation 14 pour faciliter par la suite l'insertion du tronçon de garnissage 2 dans la virole 1. Autrement dit, le dispositif d'aide à l'installation 14 permet par exemple de centrer le tronçon de garnissage 2 sur l'ouverture d'entrée 10 de sorte à pouvoir pousser facilement le tronçon de garnissage 2 dans la virole 1 et ainsi réduire les forces de frottement contre la face interne 6 de la paroi tubulaire 4. Avantageusement, au cours de l'étape de positionnement, un moyen de transport 26 du tronçon de garnissage 2 positionne le tronçon de garnissage 2 sur le berceau 16 du dispositif d'aide à l'installation 14. Dans l'exemple illustré, le moyen de transport est indépendant d'un quelconque moyen de poussée mis en oeuvre par la suite mais il convient de noter que ces moyens pourraient être réunis en une seule installation sans que cela sorte du contexte de l'invention. Le procédé d'installation comprend également une étape de centrage au cours de laquelle, à la suite de l'étape de positionnement, simultanément à celle-ci, voire le cas échéant préalablement à celle-ci, le cône amovible 22 participe à centrer le tronçon de garnissage 2 par rapport à l'ouverture d'entrée 10 de la virole 1. Durant cette étape de centrage, le tronçon de garnissage 2 est décalé le long de la direction longitudinale L vers la paroi de fond 12, le bord radial dudit tronçon de garnissage 2 longeant une surface interne du cône amovible 22 pour être centré sur l'ouverture d'entrée 10.

Préférentiellement, l'étape de centrage est réalisée en amont de l'étape de positionnement, c'est-à-dire que le tronçon de garnissage 2 est tout d'abord centré par le cône amovible 22 sur l'ouverture d'entrée 10 de la virole 1 avant d'être positionné sur le berceau 16 de la virole 1, en prévision de l'étape de poussée. On comprend ainsi que l'étape de positionnement permet de basculer de l'étape de centrage à l'étape de poussée en assurant au tronçon de garnissage 2 d'être soutenu, en évitant notamment un déplacement vertical dudit tronçon de guidage 2, après avoir été centré sur l'ouverture d'entrée 10 et avant d'être poussé dans le logement de la virole 1. Cette étape de positionnement donne ainsi le temps nécessaire pour retirer le moyen de transport 26, qui doit être dégagé pour ne pas gêner l'insertion du tronçon de garnissage 2, puis amener un moyen de poussée au contact du tronçon de garnissage 2.

Une fois ces étapes réalisées, le tronçon de garnissage 2 est déplacé le long de la direction longitudinale L vers la paroi de fond 12 de la virole 1 au cours de l'étape de poussée. Un dispositif de poussée 28 du tronçon de garnissage 2 est prévu à cet effet, apte au moins à exercer une force suffisante sur le tronçon de garnissage 2 pour qu'il se déplace dans le logement de la virole 1. Le dispositif de poussée 28 est rendu solidaire de la virole 1 en amont de l'étape de poussée afin de permettre, lorsque le dispositif de poussée 28 déplace le tronçon de garnissage 2 dans la virole 1, de maintenir en position la virole 1, diminuant le risque de déformation de la paroi tubulaire 4 et de la virole 1.

Tel que cela a été évoqué, le procédé d'installation d'un tronçon de garnissage 2 comprend une étape de démontage du dispositif d'aide à l'installation 14, au cours de laquelle, le berceau 16 et/ou le cône amovible 22 sont désolidarisés de la virole. Le cas échéant, une fois que les tronçons de garnissage 2 destinés à être installés dans la virole 1 l'ont été, le dispositif d'aide à l'installation 14 peut être démonté pour être remonté sur une autre virole 1 dans laquelle des tronçons de garnissage 2 doivent être installés.

Dans le premier mode de réalisation, le démontage du dispositif d'aide à l'installation 14 se fait par désolidarisation de l'ensemble de serrage coopérant avec le moyen de fixation 15 et le corps d'attache 17, de sorte que le dispositif d'aide à l'installation 14 ne soit plus rendu solidaire de la virole 1.

Il convient de noter que dans ce premier mode de réalisation, après l'étape de démontage du dispositif d'aide à l'installation 14 de la virole 1, les moyens de fixation 15 restent apparents sur la virole 1 au voisinage de l'ouverture d'entrée 10. Les orifices formant les moyens de fixation 15 peuvent dès lors être bouchés par des moyens d'obturation assurant l'étanchéité de la colonne de séparation gaz/liquide que la virole 1 participe à former.

L'étape de démontage du dispositif d'aide à l'installation 14 peut consister, dans la variante de l'invention dans laquelle le moyen de fixation 15 prend la forme d'un cordon de soudure, en une opération de dessoudage du dispositif d'aide à l'installation 14 et/ou de découpe de l'ouverture d'entrée 10. Avantageusement, le dessoudage est d'abord réalisé, puis une opération d'usinage est effectuée afin de rendre l'extrémité longitudinale de la virole 1 lisse sur son pourtour, comme une opération d'ébavurage par exemple. On comprend ainsi qu'aucune marque de la fixation du dispositif d'aide à l'installation 14 n'est visible sur l'ouverture d'entrée 10 à la fin du procédé d'installation du tronçon de garnissage 2.

On comprend de ce qui précède que le dispositif d'aide à l'installation 14 d'un tronçon de garnissage 2 dans la virole 1 est une solution astucieuse afin d'optimiser l'installation dudit tronçon de garnissage 2 dans la virole 1. Ce dispositif d'aide à l'installation 14 prévient ainsi les risques de déformation de la paroi tubulaire 4 de la virole 1, en positionnant correctement le tronçon de garnissage 2 par rapport à l'ouverture d'entrée 10 de la virole 1. De plus, ce dispositif d'aide à l'installation 14 peut être monté et/ou démonté d'une virole 1, permettant de pouvoir utiliser une virole sans appendice en saillie au niveau de l'ouverture d'entrée dans une colonne de séparation gaz/liquide.

La présente invention ne saurait toutefois se limiter aux moyens et configurations décrits et illustrés ici et elle s'étend également à tout moyen et configuration équivalents ainsi qu'à toute combinaison techniquement opérante de tels moyens.

## Revendications

1. Procédé d'installation d'un tronçon de garnissage (2) dans une virole (1) à l'aide d'un dispositif d'aide à l'installation (14) d'un tronçon de garnissage (2), la virole (1) comprenant au moins une paroi tubulaire (4) s'étendant le long d'une direction longitudinale (L) entre deux extrémités longitudinales et dont une face interne (6) participe à délimiter un logement du tronçon de garnissage (2), la paroi tubulaire (4) participant à délimiter à l'une de ses extrémités longitudinales une ouverture d'entrée (10), la virole (1) comprenant une paroi de fond (12) disposée à l'extrémité longitudinale de la paroi tubulaire opposée à l'ouverture d'entrée (10), la virole (1) étant positionnée horizontalement lors du procédé d'installation du tronçon de garnissage (2), le dispositif comprenant au moins un berceau (16) configuré pour positionner le tronçon de garnissage (2) en regard de l'ouverture d'entrée (10), le procédé comprenant une étape de montage du berceau (16) sur la virole (1) au cours de laquelle le berceau (16) est fixé sur une portion inférieure (18) de la virole (1) au voisinage de l'ouverture d'entrée (10), le berceau étant adjacent à la virole, une étape de positionnement du tronçon de garnissage (2) en regard de l'ouverture d'entrée (10), en coopération avec le dispositif d'aide à l'installation (14), et au moins une étape de poussée au cours de laquelle le tronçon de garnissage (2) est poussé dans le logement de la virole (1).

2. Procédé d'installation du tronçon de garnissage (2) selon la revendication précédente, durant lequel, au cours de l'étape de positionnement, un moyen de transport (26) du tronçon de garnissage (2) maintient le tronçon de garnissage (2) en regard de l'ouverture d'entrée au moins jusqu'à ce que ledit tronçon de garnissage (2) soit positionné contre le dispositif d'aide à l'installation (14).

3. Procédé d'installation du tronçon de garnissage (2) selon l'une quelconque des revendications précédentes, le dispositif d'aide à l'installation (14) d'un tronçon de garnissage (2) comprenant un cône amovible (22), le procédé d'installation du tronçon de garnissage (2) comprenant une étape de montage d'un cône amovible (22) sur la virole (1) et au moins une étape de centrage au cours de laquelle le cône amovible (22) centre le tronçon de garnissage (2) par rapport à l'ouverture d'entrée (10) de la virole (1).

4. Virole comprenant une ouverture d'entrée, une paroi tubulaire (4) s'étendant le long d'une direction longitudinale (L) entre deux extrémités longitudinales et dont une face interne (6) participe à délimiter un logement du tronçon de garnissage, une paroi de fond (12) disposée à l'extrémité longitudinale de la paroi tubulaire opposée à l'ouverture d'entrée (10) et un dispositif d'aide à l'installation (14) d'un tronçon de garnissage (2) dans la virole (1), le dispositif d'aide à l'installation (14) comprenant au moins un berceau (16) s'étendant dans un prolongement d'au moins une partie de la paroi tubulaire (4) depuis l'ouverture d'entrée (10) le long de la direction longitudinale à l'opposé de la paroi de fond (12) **caractérisée en ce que** l'au moins un berceau est adjacent à la paroi tubulaire.

5. Virole selon la revendication précédente, dans laquelle le berceau (16) présente une section au moins partiellement circulaire vue dans un plan perpendiculaire à la direction longitudinale (L) et s'inscrivant dans un cercle de diamètre identique à celui dans lequel s'inscrit la paroi tubulaire (4) de la virole (1).,

6. Virole selon la revendication 5 dans laquelle le berceau présente la forme d'un arc de cercle

7. Virole selon l'une quelconque des revendications 4 ou 5, dans laquelle le berceau (16) s'étend sur au moins 25% de la circonférence de l'ouverture d'entrée (10) de la virole (1).

8. Virole selon l'une quelconque des revendications 4, 5 ou, dans laquelle le berceau (16) présente une dimension longitudinale, mesurée entre l'ouverture d'entrée (10) de la virole (1) et une extrémité libre (20) du berceau, qui est comprise entre 75 et 150mm.

9. Virole selon la revendication 4 comprenant un moyen de fixation disposé à demeure sur la virole et configuré pour pouvoir coopérer avec un corps d'attache (17) du berceau (16).
